Europäisches Patentamt

European Patent Office

Office européen des brevets

(19)

(11) EP 1 308 971 A2

(12) **EUROPEAN PATENT APPLICATION**

(43) Date of publication:
07.05.2003 Bulletin 2003/19

(51) Int Cl.⁷: $H01G\ 4/35$

(21) Application number: 01128374.4

(22) Date of filing: 03.12.2001

(84) Designated Contracting States:
AT BE CH CY DE DK ES FI FR GB GR IE IT LI LU
MC NL PT SE TR
Designated Extension States:
AL LT LV MK RO SI

(30) Priority: 15.10.2001 US 981150

(71) Applicant: Greatbatch-Sierra, Inc.
Carson City, Nevada 89706 (US)

(72) Inventors:
• Haskell Donald K
  Minden Nevada 89423 (US)
• Stevenson Robert A
  Canyon County, CALIFORNIA 91387 (US)

(74) Representative:
Richter, Werdermann, Gerbaulet & Hofmann
Neuer Wall 10
20354 Hamburg (DE)

(54) **Apparatus and process for the control of electromagnetic fields on the surface of emi filter capacitors**

(57) In a feedthrough terminal assembly, a guard electrode plate is disposed within the ceramic casing and adjacent to a surface of an electromagnetic interference (EMI) filter capacitor for reducing electromagnetic field stress on that surface. In a related process, the ground electrode plate is optimized utilizing computer generated electrostatic field modeling. The guard electrode plate may be grounded, either to external ca-
pacitor surface metallization or internal capacitor surface metallization. Alternatively, the guard electrode plate may float within the casing in a manner where it is electrically isolated from both the active and ground sets of electrode plates of the EMI filter capacitor. A second guard electrode plate may also be disposed within the casing adjacent to an opposite axial surface of the capacitor casing for reducing electromagnetic field stress on that adjacent surface of the casing.

FIG. 11

EP 1 308 971 A2

**Description**

BACKGROUND OF THE INVENTION

This invention relates generally to feedthrough capacitor filter assemblies, particularly of the type used in active implantable medical devices such as implantable cardioverter defibrillators (ICDs) and the like, to decouple and shield internal electronic components of the medical device from undesirable electromagnetic interference (EMI) signals. More specifically, this invention relates to an improved feedthrough capacitor which is mounted to a hermetic terminal pin and includes one or more guard electrode plates to manage the electromagnetic fields on the surface of the feedthrough capacitor. Additionally, the invention relates to a process for grading electromagnetic fields generated so that the electrode plates may be custom designed to a particular capacitor or external structure geometry, such as the circuit topology and the associated mechanical structures.

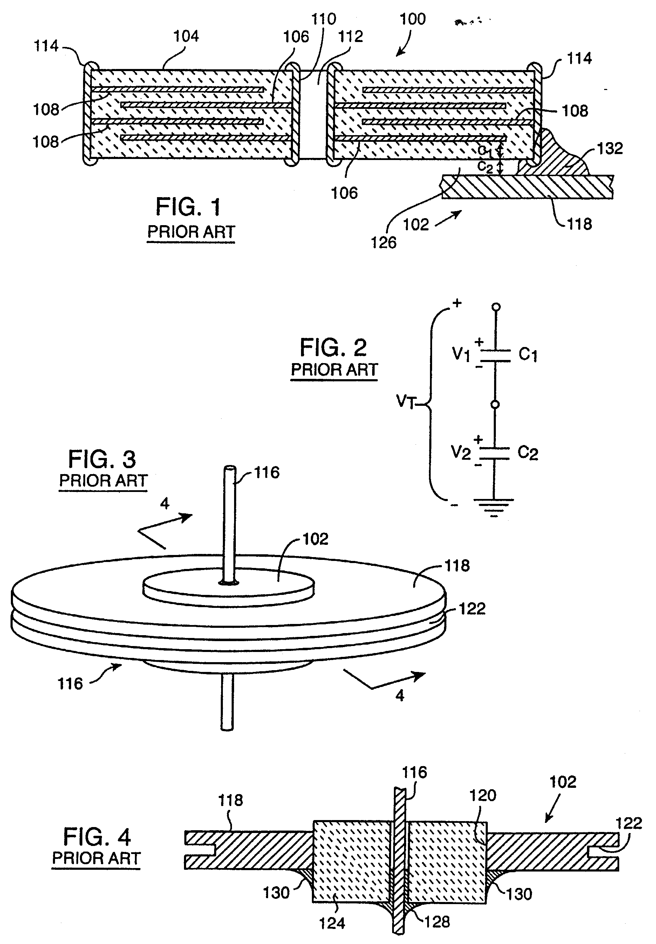

FIGS. 1-6 illustrate an exemplary prior art feedthrough filter capacitor 100 and its associated hermetic terminal 102. The feedthrough filter capacitor 100 comprises a unitized dielectric structure or ceramic-based monolith 104 having multiple capacitor-forming conductive electrode plates formed therein. These electrode plates include a plurality of spaced-apart layers of first or "active" electrode plates 106, and a plurality of spaced-apart layers of second or "ground" electrode plates 108 in stacked relation alternating or interleaved with the layers of "active" electrode plates 106. The active electrode plates 106 are conductively coupled to a surface metallization layer 110 lining a bore 112 extending axially through the feedthrough filter capacitor 100. The ground electrode plates 108 include outer perimeter edges which are exposed at the outer periphery of the capacitor 100 where they are electrically connected in parallel by a suitable conductive surface such as a surface metallization layer 114. The outer edges of the active electrode plates 106 terminate in spaced relation with the outer periphery of the capacitor body, whereby the active electrode plates are electrically isolated by the capacitor body 104 from the conductive layer 114 coupled to the ground electrode plates 108. Similarly, the ground electrode plates 108 have inner edges which terminate in spaced relation with the terminal pin bore 112, whereby the ground electrode plates are electrically isolated by the capacitor body 104 from a terminal pin 116 and the conductive layer 110 lining the bore 112. The number of active and ground electrode plates 106 and 108, together with the dielectric thickness or spacing therebetween, may vary in accordance with the desired capacitance value and voltage rating of the feedthrough filter capacitor 100.

The feedthrough filter capacitor 100 and terminal pin 116 is assembled to the hermetic terminal 102 as shown in FIGS. 3 and 4. In the exemplary drawings, the hermetic terminal includes a ferrule 118 which comprises a generally ring-shaped structure formed from a suitable biocompatible conductive material, such as titanium or a titanium alloy, and is shaped to define a central aperture 120 and a ring-shaped, radially outwardly opening channel 122 for facilitated assembly with a test fixture (not shown) for hermetic seal testing as will be described further herein, and also for facilitated assembly with the housing (also not shown) on an implantable medical device or the like. An insulating structure 124 is positioned within the central aperture 120 to prevent passage of fluid such as patient body fluids through the feedthrough filter assembly during normal use implanted within the body of a patient. More specifically, the hermetic seal comprises an electrically insulating or dielectric structure 124 such as an alumina or fused glass type or ceramic-based insulator installed within the ferrule central aperture 120. The insulating structure 124 is positioned relative to an adjacent axial side of the feedthrough filter capacitor 100 and cooperates therewith to define a short axial gap 126 therebetween. This axial gap 126 forms a portion of a leak detection vent and facilitates leak detection which will be described in greater detail below. The insulating structure 124 thus defines an inboard face presented in a direction axially toward the adjacent capacitor body 104 and an opposite outboard face presented in a direction axially away from the capacitor body. The insulating structure 124 desirably forms a fluid-tight seal about the inner diameter surface of the conductive ferrule 118, and also forms a fluid-tight seal about the terminal pin 116 thereby forming a hermetic seal suitable for human implant. Such fluid impermeable seals are formed by inner and outer braze seals or the like 128 and 130. The insulating structure 124 thus prevents fluid migration or leakage through the ferrule 118 along any of the structural interfaces between components mounted within the ferrule, while electrically isolating the terminal pin 116 from the ferrule 118.

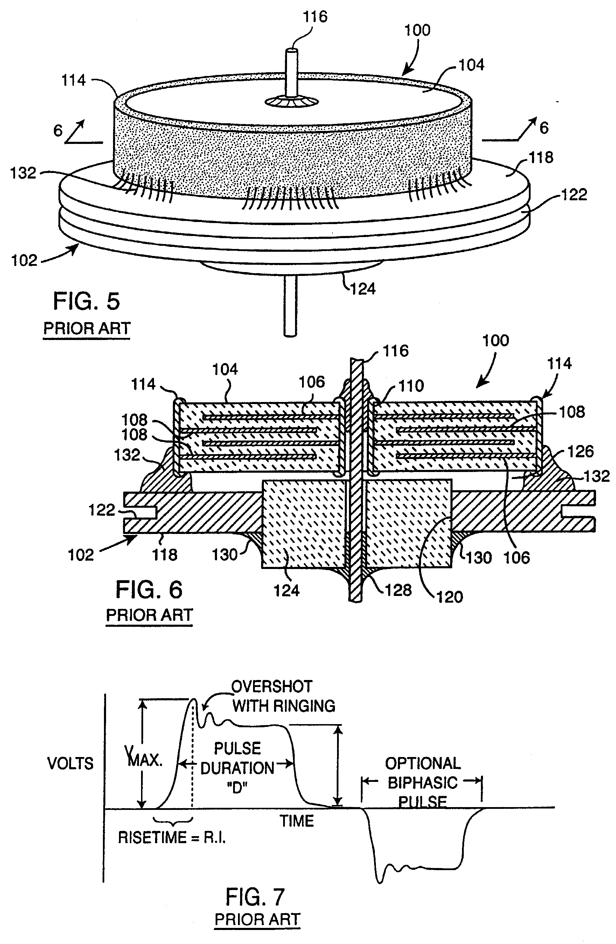

The feedthrough filter capacitor 100 is mechanically and conductively attached to the conductive ferrule 118 by means of peripheral supports 132 which conductively couple the outer metallization layer 114 to a surface of the ferrule 118 while maintaining an axial gap 126 between a facing surface of the capacitor body 104, on the one hand, and surfaces of the insulating structure 124 and ferrule 118, on the other. The outside diameter connection between the capacitor 100 and the hermetic seal 102 is accomplished typically using a high temperature conductive thermal-setting material such as a conductive polyimide. It will also be noted in FIG. 5 that the peripheral support 132 material is preferably discontinuous. In other words, there are substantial gaps between the supports 132 which allow for the passage of helium during a leak detection test.

Waveguide calculations are used during the design of the capacitor 100 such that the gaps in the peripheral supports 132 are waveguides below cutoff for the frequencies of interest. Specifically, if the capacitor 100 is to be used

**EP 1 308 971 A2**

for the attenuation of cellular telephone frequencies up to and including 3 GHz, it is important that these gaps be short enough in length and controlled in thickness such that they do not become waveguides. Bessell function equations are used to solve for the maximum allowable gap thickness and width. If these gaps were to become waveguides, it would be possible for the electromagnetic interference to directly enter through such gap between the capacitor 100 and the hermetic terminal 102, therefore precluding the proper operation of the EMI filter device. In actual practice, by keeping these gaps small in conjunction with placing the conductive thermal-setting material 132 in a discontinuous manner as shown in FIG. 5, is relatively easy to achieve the high frequency performance desired while at the same time providing a small gap for the passage of helium leak gases.

Over the years, there has been a trend for implantable medical devices to become increasingly smaller. This has certainly been true for ICDs which have been reduced in size from over 100ccs to less than 39ccs. Because of this, the internal components and circuits are being placed together in much closer proximity. This is a unique design challenge for a high voltage device because as components become smaller the tendency for surface breakdown or arcing becomes significant.

In the past, one way of managing this surface breakdown is to add a conformal coating such as a high temperature thermal setting nonconductive adhesive (i.e., an epoxy or a polyimide) on non-conductive surfaces of the capacitor. This has the effect of grading the electromagnetic fields at the surface of the ceramic capacitor. The ceramic capacitor material is generally of a high K material such as BX or X7R Barium Titanate. The K of this material typically is in the area of 2500. Accordingly, the management of electromagnetic fields at both the upper and lower surface boundaries of the capacitor is a very significant challenge because of the transition from the high K of the capacitor material to the low K of air that has a dielectric constant of 1 (relative permeability of 1). The use of conformal coatings or other materials bonded to the surface of the capacitor helps to grade these fields because the coating materials generally have a K that is intermediate between the ceramic dielectric and air. The typical K of such materials varies from 3.0 to 6.5, allowing the fields to relax at the surface of the capacitor therefore reducing the chance for dielectric breakdown.

However, a problem with using conformal coatings is that adjunct sealants tend to mask a defective hermetic terminal 102. That is, if one were to solidly bond the ceramic capacitor 100 to the hermetic terminal 102 in such a way to preclude or to grade the electromagnetic field at the capacitor surface, then the same conformal coating material would also form an adjunct seal over the hermetic terminal. The hermetic terminals for implantable medical devices are typically formed by using noble metals such as platinum or gold that are brazed to an alumina hermetic seal 124. If one of these braze operations were, for example, defective, the hermetic terminal 102 may allow, over time, for the passage of body fluids to the interior of the implantable medical device. Intrusion of body fluids into the interior of an implantable medical device is a very serious matter, which can lead to catastrophic failure of the device.

After installation of the hermetic terminal and sealing of the housing of the implantable medical device, hermeticity tests are typically performed using a helium leak tester. This test is done in a matter of a few seconds. The problem is that sealants used to protect the capacitor surface would also form an adjunct seal (temporary seal only) over the hermetic terminal 102 thereby causing a false positive test. In other words, the adjunct sealing that was used to grade the electromagnetic field would also form a temporary seal over the hermetic seal, thereby allowing it to pass the helium leak detection test even if the hermetic terminal was defective. Unfortunately, these adjunct polymer seals will degrade over time and allow moisture intrusion. In addition, moisture may penetrate directly through the adjunct seal due to its inherent bulk permeability. This process could take weeks, months or even years.

Thus, it is desirable to space the high frequency ceramic feedthrough capacitor 100 at a small separation distance from the hermetic terminal 102 to facilitate passage and easy detection of helium during an hermeticity test. However, it is not possible to place the high frequency feedthrough capacitor at a large distance from the hermetic terminal, as this would allow for the ingress of undesirable high frequency electromagnetic signals, such as those produced by a cellular telephone, which can easily get past the EMI filter and enter the housing of the implantable medical device. It is for this primary reason that proper EMI filtering must occur directly at the point of the ingress and egress of the lead wires of the implantable medical device. Accordingly, there exists a need for a methodology of controlling the electromagnetic fields on the surface of the capacitor which (1) allows a gap between the feedthrough capacitor and the hermetic terminal to facilitate the easy passage of helium during the helium leak detection test, (2) ensures that the electric fields on the surfaces of the capacitors do not exceed the dielectric breakdown strength across the surfaces of the capacitors, and (3) is volumetrically efficient in design.

The development of high electromagnetic field gradients in air or gas external to the capacitor's dielectric is very problematic and results in partial discharges, corona, or catastrophic avalanche breakdown. The primary concern with microcoulomb discharges or with corona is one of statistics. A device can withstand many partial discharges that occur over a period of time. However, if one of these partial discharges occurs in an area of high dielectric stress, this could lead to a complete avalanche or high voltage breakdown of the device. HV design engineers often call such a breakdown a "crow-bar" or "flash-over." Such high voltage breakdown has been observed in the manufacturing of high voltage hermetic filtered feedthrough capacitor assemblies for ICD applications. The high voltage avalanche is usually

3

catastrophic and results in a complete meltdown and destruction of the capacitor and the hermetic terminal itself. If such a catastrophic breakdown ever occurred in the implanted cardioverter defibrillator, such could lead to complete failure of the implanted device which would put the patient at risk. Thus, it is extremely important that components for the implantable cardioverter defibrillator be designed in a very reliable manner such that catastrophic breakdown is ruled out as either impossible or extremely unlikely.

When a high voltage is applied to a monolithic ceramic capacitor (MLC), high electric field gradients occur in the immediate vicinity of the device. When these fields exceed the breakdown strength of the dielectric medium (air, nitrogen, etc.) an undesirable electric arc or discharge can result. This electric arc or flashover can occur between conductive pins 116 or between conductive pin 116 and surface metallization layer 114 or from term pin 116 to conductive ferrule 118 or from conductive pin 116 to adjacent structures in the implantable medical device such as batteries, flex circuitry or the like. Such arcing can lead to catastrophic failure of the MLC due to the enormous heat and shock wave that is created. Moreover, high electric field gradients may occur even at modest voltages where the electrode gaps and spacing are small (particularly if there is a mismatch in dielectric constant).

In a capacitor the charge Q (in Coulombs) is equal to the product of the capacitance value C (in Farads) and the applied DC voltage V (in Volts), or: Q=CV. With reference to FIGS. 1 and 2, for capacitors in series with a DC voltage applied across the series combination, the voltage that appears across each capacitor is inversely proportional to its dielectric constant. Air (or other dielectrics) in the vicinity of an MLC can act as one of the series capacitors (C2).

The total capacitance is calculated by the equation:

$$C_T = 1/(1/C1 + 1/C2)$$

The total charge on the two capacitors in series is the applied voltage $V_T$ times $C_T$. Where: $Q=(C_T)(V_T)$

However, the charge on $C_1$ is equal to the charge on $C_2$ because they share a common electrode (the capacitor cover sheet) where they are connected in series.

Therefore, since $Q_1 = Q_2$, then by substitution,

$$C_1 V_1 = C_2 V_2, \text{ or by cross multiplying gives: } C_1/C_2 = V_2/V_1 \qquad \text{Equation 1.}$$

And, from Kirchoffs Voltage Law,

$$V_1 + V_2 = V_T \qquad \text{Equation 2.}$$

The relative values of C1 (in the MLC cover layers) and the gap (for example, air) are inversely proportional to their dielectric constants. For example, for an MLC cover layer sheet that has a dielectric constant of 2500, its capacitance may be 100 picofarads. The adjacent air gap typically has a capacitance in the order of 1 picofarad. With an output voltage of 750 volts (representing a typical ICD) applied to the series combination, the voltage that appears across the air gap is calculated by solving equations 1 and 2 simultaneously as follows:

$$C_1/C_2 = V_2/V_1, \text{ or } 100/1 = V_2/V_1 \qquad \text{Equation 1}$$

$$V_1 + V_2 = V_T, \text{ or } V1 + V2 = 750 \qquad \text{Equation 2}$$

The voltage across the air gap is found by solving equations 1 and 2 simultaneously which gives V2 = 740 Volts.

The result described above is very undesirable in that the bulk of the applied voltage appears across the air gap. The dielectric breakdown strength of air is much lower than the ceramic dielectric; accordingly, the chance for catastrophic failure is high. High voltage breakdown of gas varies with the gap size, temperature, humidity or moisture content and pressure.

The foregoing discussion demonstrates that high electric field gradients can occur when the field suddenly transitions from a region of relatively high dielectric constant to a region of low dielectric constant. One method of managing this situation is to grade the field with a material of intermediate dielectric constant. An example of this would be a conformal coating of epoxy. However, this is not an ideal solution because the epoxy increases the size of the capacitor and is a material which does not match the thermal coefficient of expansion (TCE) of the ceramic dielectric.

This TCE mismatch is particularly problematic in an ICD application where the ceramic feedthrough capacitor EMI filter must withstand the heat associated with installation by laser welding and the expansion of the capacitor itself due to piezoelectric effects. Another contra-indication to the use of adjunct sealants or coatings in an ICD application is that such sealants may mask a leaking hermetic seal.

Another situation unique to implantable cardioverter defibrillators (ICDs) is caused by the application of a biphasic waveform to the MLC. FIG. 7 is a typical biphasic pulse produced by an implantable cardioverter defibrillator (ICD). This pulse is applied via implanted lead wires to myocardial tissue in order to terminate life threatening tachyarrythmias such as ventricular tachycardia, ventricular fibrillation, atrial defibrillation and the like. The hermetic terminal and EMI filter capacitor are directly exposed to this biphasic pulse when therapy is applied. The design output voltage of an ICD is typically 750 to 820 volts. However, with inductive ringing and overshoot, Vmax can reach up to 1200 volts when measured at the filter capacitor. This is a very significant voltage across small gaps such as those described in connection with FIGS. 1 and 2 between the bottom of the capacitor and the hermetic terminal or adjacent structures. This significant voltage can result in very high electric field stress as shown.

The biphasic waveform is often selected due to its efficacy in treating cardiac arrhythmias. In order to properly decouple EMI from cellular telephones and other high frequency emitters, the MLC feedthrough filter capacitor is typically installed directly on the high voltage output hermetic terminal of the ICD. Therefore, the ceramic feedthrough capacitor is directly exposed to the HV biphasic defibrillation pulse. This pulse causes a unique situation for the ceramic capacitor. High permitivity ceramic dielectrics are generally ferroelectric. This means that they exhibit dielectric hysterisis and dielectric absorption. After application of the positive portion of the biphasic waveform, significant charge recovery may occur before application of the negative (biphasic) pulse. The result is a pooling of charge on the ceramic capacitor cover layers which can cause partial discharges to the ground plate.

As previously noted, even at modest voltages high fields can lead to break down. Modeling and knowledge of the high voltage properties of dielectric materials enables the designer to evaluate electric field intensities and their effect on performance. JASON electrostatic modeling code has been used for this purpose for many years. The JASON code, initially developed at Lawrence Livermore National Laboratories, is a 2-D finite element Poisson solver with a built-in grid generator. Most often, it is used to do potential calculations and generate potential plots by specifying a grounded and charged voltage boundary (Dirichlet boundary conditions), and specifying the dielectric constants of the different materials of the problem universe. The program can integrate the E-Line along voltage boundaries to calculate the capacitance of a part or all of one electrode to another. JASON code can propagate E-Lines from one electrode to another and calculate the capacitance, inductance, impedance and time length of each strip defined by the E-Lines. Output typically comprises contours of constant potential or E-Lines, although it has the capability of generating line plots of potential or field problems along any path in the problem universe. The modeling capability can accommodate multiple dielectrics, capacitors and inductors. It can also handle free charge distributions. These capabilities are important when designing a high voltage ceramic feedthrough capacitor EMI filter for an implantable cardioverter defibrillator or other high voltage devices. There are other commercially available electric field modeling programs that are now available such as the E-State Finite Element Electrostatics Program from Field Precision Co. of Albuquerque, New Mexico.

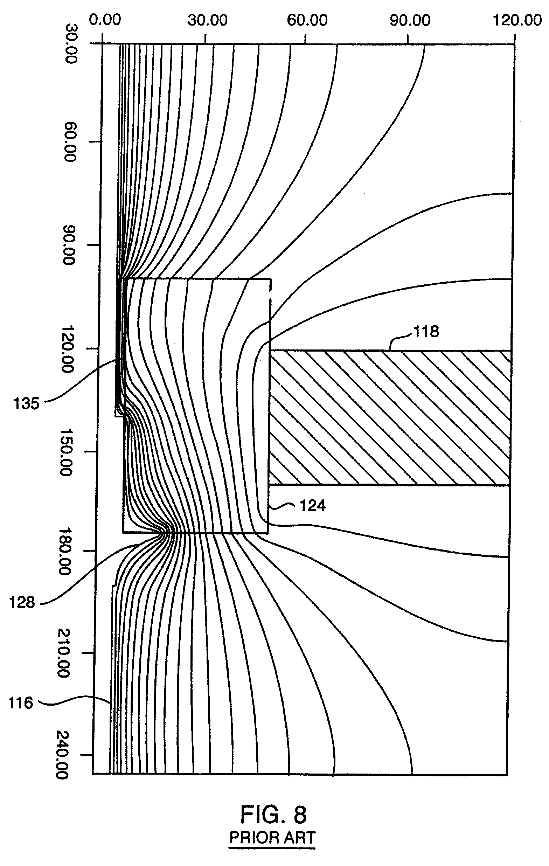

FIG. 8 illustrates JASON code electrostatic field modeling of the unipolar hermetic terminal shown in FIGS. 3 and 4. FIG. 8 is a cross-sectional slice of the right hand quadrant of FIG. 3. The best way to visualize FIG. 8 is as an axis of rotation around the lead wire or terminal pin 116. One half of the lead wire or terminal pin 116 is shown in the left edge of FIG. 8 running vertically. Again, it is important to visualize FIG. 8 as an axis of rotation. JASON code has the capability of producing 3-dimensional models; however, for this purpose 2-D modeling is sufficient if the designer simply visualizes the section of FIG. 8 rotating about the center lead wire 116 shown on the left edge. Electric field lines, as illustrated in FIG. 8, are very useful in analyzing the points of high dielectric stress. Where the lines are spaced far apart, this indicates a region of relatively low electric field stress. Where the lines are very close together, this is indicative of an area where the E-field stress is relatively high.

In FIG. 8 one can see an area 135 of very high dielectric stress between the alumina hermetic insulator 124 and the lead wire shown in the area of the gap where braze material 128 did not fill. In this area, microcoulomb discharges are definitely possible. For this reason a backfill is often placed in this area in order to prevent partial discharges or corona. As shown, the electric field stress is greater than 200 volts per mil at this area that is mentioned. In small gaps, 200 volts per mil can exceed the dielectric breakdown strength of air (which is approximately 140 volts per mil.).

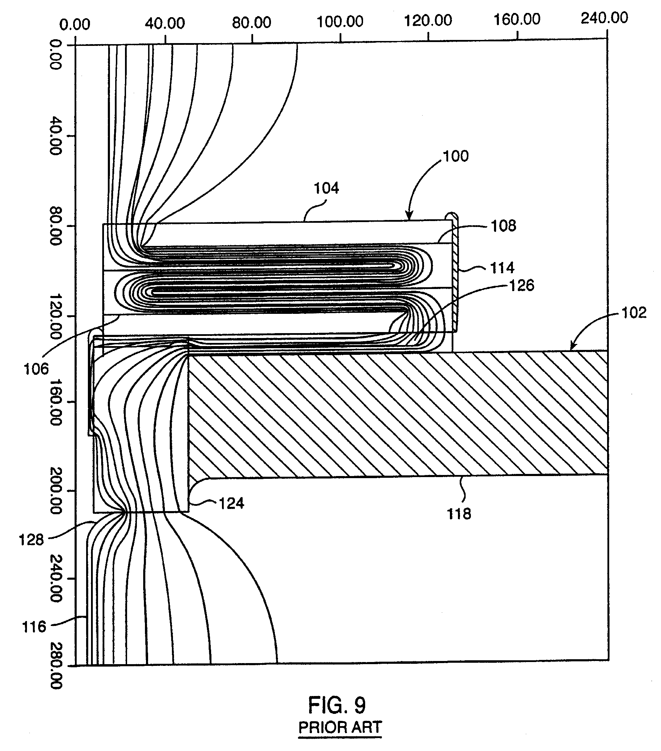

FIG. 9 illustrates the same equipotential modeling of the unipolar terminal 102 together with the feedthrough capacitor 100 as shown in FIGS. 5 and 6. In summary, FIG. 9 is an equipotential model of the capacitor of FIGS. 5 and 6 on an axis of rotation around the center lead 116. One can see that the active electrode plate 106 is directed downward. That is, the bottom most electrode plate of the ceramic capacitor 100 is that electrode that is conductively coupled to the center lead wire or terminal pin 116. This results in relatively high electric field stresses in the vicinity of the capacitor 100, between the bottom of the capacitor, through the air gap 126, and the top of the hermetic insulator 124 and ferrule 118. This represents an actual design attempt that resulted in a number of corona discharges and catastrophic failures.

The reason is that the high electric field stress that develops between the bottom of the feedthrough capacitor 100 and the hermetic terminal 102 exceeds 140 volts per mil which leads to the breakdown of the dielectric gases present in that region.

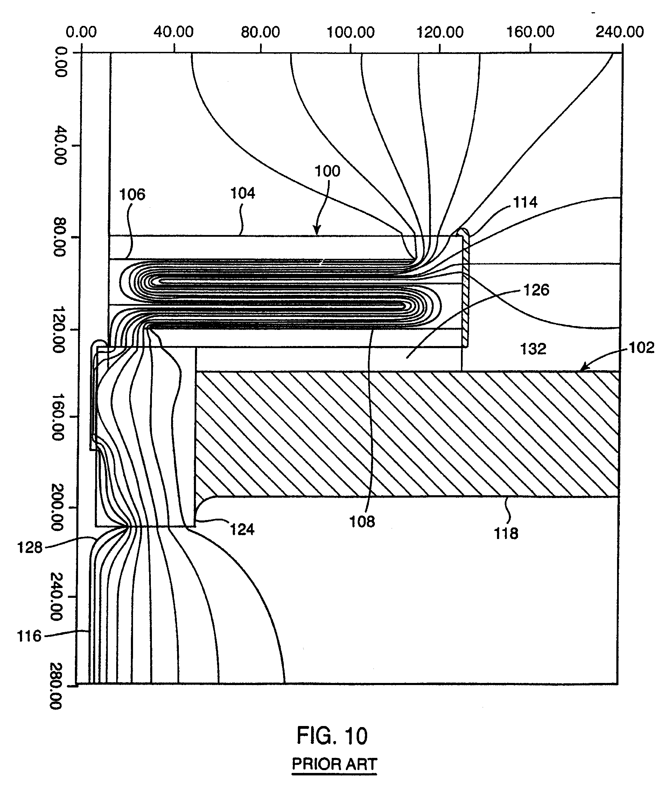

FIG. 10 is the same equipotential model as FIG. 9 except that the capacitor 100 has been turned upside down. In this case, the capacitor's active electrodes plate 106 is oriented up. Oriented down at the gap 126 between the capacitor 100 and the hermetic terminal 102 is the capacitor's ground electrode plate 108 which is attached to the outside diameter of the capacitor. This ground electrode plate 108 has the same electric field potential as the conductive ferrule 118 of the hermetic terminal 102. Accordingly, this eliminates the high electric field stress between the ceramic capacitor 100 and the metallic ferrule 118. As can be seen in FIG. 10, there is literally no electric field stress that occurs between the bottom of the ceramic capacitor 100 and the hermetic terminal 102. Desirably, all of the electromagnetic field stress is included within the alumina hermetic insulator 124 which has a very high break down strength. This is highly desirable because the breakdown strength of the alumina is greater than 1000 volts per mil as compared to air, which can breakdown at stresses as low as 140 volts per mil. A disadvantage of the capacitor electrode plate configuration in FIG. 10 is that relatively high stresses are emanating from the upper right hand corner of the capacitor. This can be a problem if the capacitor is placed in close proximity to other structures within the implantable medical device, such as a flex cable, battery, substrate or the like.

In view of all of the foregoing, there exists a need for a methodology for controlling the electromagnetic fields on the surface of a capacitor which (1) allows a gap between the feedthrough capacitor and the hermetic terminal to facilitate the easy passage of helium during a helium leak detection test, and (2) ensures that the electromagnetic fields on the surfaces of the capacitors do not exceed the dielectric breakdown strength or flash over on the top or bottom of the capacitors. Additionally, it is important that components for implantable cardioverter defibrillators and the like be designed in a very reliable manner such that catastrophic breakdown is ruled out as either impossible or extremely unlikely. Further, a novel method of design analysis and equipotential modeling is needed in designing high voltage feedthrough capacitors utilized in restricted environments. Moreover, novel capacitor designs are needed which reduce or eliminate problems that are inherent with surface flash over and "pooling of charges" on the capacitor surface. Such charge pools, particularly in a biphasic device, can lead to microcoulomb discharges from the capacitor surface. These microcoulomb discharges are actually very tiny electric sparks that emanate from the pooling of electrons on the capacitor's surface. Such sparks have been observed to produce an audible ping or be visible in a darkened room. The present invention fulfills these needs and provides other related advantages.

SUMMARY OF THE INVENTION

An improved EMI feedthrough capacitor is provided for use in an electromagnetic interference filter application in, for example, an implantable medical device such as an implantable cardioverter defibrillator (ICD). The high voltage EMI filter capacitor is designed using equipotential modeling techniques and embodies one or more guard electrode plates in order to grade electric fields on the surfaces of the capacitor. This improves the reliability of the capacitor in a high voltage pulse application and eliminates the possibility of breakdown due to surface arc-overs also known as surface dielectric breakdown. Advantages of utilizing the guard plate electrodes are increased reliability, reduced size, and the reduction and/or elimination of the need for dielectric conformal coatings.

The addition of guard electrode plates to a traditional EMI filter capacitor improves the high frequency performance of the feedthrough capacitor EMI filter. The guard electrode will have a much lower capacitance than the main capacitor; accordingly, it will self-resonate at a much higher frequency. This "staggering" of resonant frequencies improves the EMI filter broadband frequency attenuation. For example, this enables the isolated ground EMI filter as described by 5,751,539 (the contents of which are incorporated herein) to be more effective throughout the 950 MHz to 1.8 GHz frequency range in which hand-held personal communication devices (such as digital cellular phones) are typically operated.

The guard and other electrode plates within the EMI filter capacitor may be of dual electrode construction as described in U.S. patent 5,978,204 (the contents of which are incorporated herein). This has the added benefit of reducing capacitor inductance which improves high frequency filter performance.

In a preferred embodiment, the present invention resides In a capacitor assembly comprising a casing of dielectric material, active and ground sets of electrode plates disposed within the casing to form an electromagnetic Interference (EMI) filter capacitor, and a guard electrode plate disposed within the casing adjacent to a surface thereof. The guard electrode plate serves to reduce electromagnetic field stress on the surface of the casing.

More specifically, the capacitor assembly comprises a casing having first and second electrode plates encased therein In spaced relation to form an electromagnetic Interference (EMI) filter capacitor, and at least one terminal pin bore formed axially therethrough. At least one conductive terminal pin extends through the at least one terminal pin bore in conductive relation with the first electrode plate. A conductive ferrule having at least one aperture formed axially therethrough Is mounted to the casing such that the casing extends across and closes the at least one ferrule aperture with the second electrode plate in conductive relation with the ferrule. At least one hermetic seal Is formed from a dielectric material and extends across and seals the at least one ferrule aperture at one axial side of the capacitor body. The at least one hermetic seal defines an Inboard face presented toward the capacitor body and an outboard face presented away from the capacitor body. The at least one terminal pin extends through the at least one hermetic seal. A guard electrode plate Is disposed within the casing adjacent to a first surface thereof, facing the conductive ferrule, for reducing electric field stress on the first surface of the casing. In various embodiments, the at least one hermetic seal and the capacitor body cooperatively define an axial gap formed therebetween. The first and second electrode plates respectively comprise first and second sets of electrode plates encased in interleaved spaced relation within the capacitor body. The capacitor body is formed of a substantially monolithic dielectric material.

In several embodiments, the at least one terminal pin bore comprises a plurality of axially extending terminal pin bores formed in the capacitor body. The at least one conductive terminal pin comprises a corresponding plurality of terminal pins extending respectively through the terminal pin bores and a corresponding plurality of hermetic seals. The capacitor body may be of a discoidal shape or rectangular, or any other shape that meets the needs of the apparatus with which it is to be used.

In an internally grounded configuration as described in U.S. Patent No. 5,905,627, a plurality of axially extending terminal pin bores are formed in the capacitor body. At least one conductive ground pin extends into at least one of the plurality of axially extending terminal pin bores in conductive relation with the second electrode plate.

The guard electrode plate may be grounded or it may float with the casing in electrically isolated relation with the first and second sets of electrode plates. The gap is optimized utilizing JASON code or other method of electrostatic field modeling. Preferably, the guard electrode plate is disposed between an active electrode plate and a surface of the casing.

Several of the illustrated embodiments show that the guard electrode plate may be disposed adjacent to either or both surfaces of the feedthrough filter capacitor. Moreover, the feedthrough filter capacitor may include an isolated ground set of electrode plates disposed coplanarily within the casing with the first or active set of electrode plates, and electrically isolated from the first or active set of electrode plates. The second or ground set of electrode plates cooperates with the isolated set of electrode plates to define a coupling capacitor for coupling the EMI filter capacitor to a common ground point.

[0039] - The invention is further directed to a process for reducing electric field stress on the surface of a capacitor in a feedthrough terminal assembly. The inventive process of the present invention comprises the steps of forming an electromagnetic interference (EMI) filter capacitor of an active electrode plate and a ground electrode plate disposed within a casing of dielectric material, where the feedthrough filter capacitor has at least one terminal pin bore formed axially therethrough. A terminal assembly comprising at least one conductive terminal pin and a conductive ferrule is placed adjacent to the first surface of the casing such that the terminal pin extends through the terminal pin bore and is conductively coupled to the active electrode plate. The ground electrode plate is conductively coupled to the ferrule. A guard electrode plate is also provided within the casing adjacent to the first surface thereof. The guard electrode plate is optimized utilizing electrostatic field modeling of the assembled feedthrough terminal assembly.

The optimizing step includes adjusting the axial spacing between the guard electrode plate and an adjacent active electrode plate within the casing. Moreover, the optimizing step may include adjusting an inner diameter space between the terminal pin and an edge of the guard electrode plate. Additional electric field management is done by adjusting the capacitor inner diameter margin area to effect a smooth transition of electric field lines from the hermetic insulator.

In summary, for ICD and other applications involving high voltages in small spaces, electric field strength (not just voltage) must be considered in design. The novel guard electrode plates and up/down active plate orientation as described herein are a very effective way to manage the electric field stress so that the bulk of the field is constrained within the ceramic dielectric or hermetic seal insulator itself. The novel guard electrode plates as described herein are generally compatible with all of the various types of hermetic feedthrough terminal technologies currently in use for human implant applications. The invention as described herein is also applicable to other monolithic ceramic capacitors used on the substrate or in other locations within, for example, an implantable cardioverter defibrillator.

Other features and advantages of the present invention will become apparent from the following more detailed description, taken in conjunction with the accompanying drawings which illustrate, by way of example, the principles of the invention.

BRIEF DESCRIPTION OF THE DRAWINGS

The accompanying drawings illustrate the invention. In such drawings:

FIGURE 1 is a partially fragmented cross-sectional view through a prior art unipolar discoldal feedthrough capacitor EMI filter, wherein the capacitor is mounted to an underlying ferrule and spaced therefrom by a small gap;

FIGURE 2 is an electrical schematic of the feedthrough filter capacitor of FIG. 1;

FIGURE 3 is a perspective view of a prior art unipolar hermetic terminal intended to be utilized in connection with the feedthrough filter capacitor of FIG. 1;

FIGURE 4 is a cross-sectional view taken along the line 4-4 of FIG. 3;

FIGURE 5 Is a perspective view of the feedthrough filter capacitor of FIG. 1 mounted to the hermetic terminal of FIGS. 3 and 4;

FIGURE 6 is a sectional view taken generally along the line 6-6 of FIG. 5;

FIGURE 7 is a representation of a typical biphasic pulse produced by an implantable cardioverter defibrillator (ICD);

FIGURE 8 illustrates JASON code electrostatic field modeling of the unipolar hermetic terminal shown In FIGS. 3 and 4;

FIGURE 9 illustrates JASON code electrostatic field modeling of the unipolar terminal 102 together with the feedthrough capacitor 100 as shown in FIGS. 5 and 6;

FIGURE 10 illustrates JASON code electrostatic field modeling of the structure of FIGS. 5 and 6 (similar to FIG. 9), with the exception that the capacitor 100 has been turned upside down;

FIGURE 11 is a sectional view of a novel capacitor embodying the present invention with guard (ground) electrode plates top and bottom mounted to an underlying hermetic terminal, similar to FIG. 6;

FIGURE 12 illustrates JASON code electrostatic field modeling of the structure shown in FIG. 11, wherein the electric field stress is eliminated on the bottom of the capacitor in the helium leak space and the electric field stress on the top of the capacitor is desirably located near the lead wire;

FIGURE 13 is a perspective view of a bipolar feedthrough filter capacitor embodying the present invention;

FIGURE 14 is a sectional view illustrating the configuration of active electrode plates within the capacitor of FIG. 13;

FIGURE 15 is another sectional view illustrating the configuration of ground electrode plates within the capacitor of FIG. 13;

FIGURE 16 is an electrical schematic of the capacitor of FIG. 13;

FIGURE 17 is a vertical cross-sectional view of a bipolar feedthrough filter capacitor similar to that illustrated in FIG. 13, including an upper floating or guard electrode plate in accordance with the present invention;

FIGURE 18 is a horizontal section taken generally along the line 18-18 of FIG. 17;

FIGURE 19 is a vertical section similar to FIG. 17, illustrating another variation of the capacitor of FIG. 13, wherein the floating electrode plate is oriented at the bottom of the capacitor;

FIGURE 20 is a vertical section similar to FIGS. 17 and 19, further illustrating a preferred embodiment wherein upper and lower floating electrode plates are provided;

FIGURE 21 is a vertical section similar to FIG. 17, illustrating the use of an upper grounded guard electrode plate;

FIGURE 22 is a horizontal section taken generally along the line 22-22 of FIG. 21;

FIGURE 23 is a vertical section similar to FIG. 21, illustrating a lower grounded guard electrode plate;

FIGURE 24 is a vertical section similar to FIGS. 21 and 23 illustrating use of both upper and lower grounded guard electrode plates;

FIGURE 25 is an electrical schematic of the feedthrough filter capacitor of FIG. 24;

FIGURE 26 is an exploded perspective view of an internally grounded quad polar EMI feedthrough capacitor assembly in accordance with U.S. Patent No. 5,905,627 wherein a centered pin is utilized to directly ground the capacitor to the hermetic terminal;

FIGURE 27 is a horizontal section through the capacitor of FIG. 26, illustrating the configuration of active sets of electrode plates therein;

FIGURE 28 is a horizontal section through the capacitor of FIG. 26, illustrating the configuration of internally grounded electrode plates therein;

FIGURE 29 is a horizontal section similar to FIG. 28, illustrating the configuration of an upper grounded guard electrode plate within the capacitor of FIG. 26;

FIGURE 30 is a vertical cross-section taken generally along the line 30-30 of FIGURE 26;

FIGURE 31 is a vertical section similar to FIG. 30 illustrating an alternative electrode plate arrangement within the capacitor where the upper guard electrode is floating;

FIGURE 32 illustrates the configuration of the active electrode plates within the capacitor of FIG. 31;

- FIGURE 33 illustrates the configuration of an internally grounded ground set of electrode plates within the capacitor of FIG. 31;

FIGURE 34 illustrates the configuration of an upper floating electrode plate at the top end of the capacitor of FIG. 31;

FIGURES 35 and 36 illustrate the electrode plate arrangements for a rectangular quad polar feedthrough capacitor utilizing the isolated ground technology of U.S. Patent No. 5,751,539;

FIGURE 37 illustrates a floating guard electrode plate to be utilized in connection with those illustrated in FIGS. 35 and 36; and

FIGURE 38 is an electrical schematic of a capacitor formed utilizing the electrode plates of FIGS. 35 through 37.

DETAILED DESCRIPTION OF THE PREFERRED EMBODIMENTS

As shown in the drawings for purposes of illustration, the present invention relates to an improved feedthrough filter capacitor assembly for shielding or filtering of undesirable interference signals from a conductive terminal pin or lead, particularly of the type used in an implantable medical device such as cardioverter defibrillator (ICD) or the like.

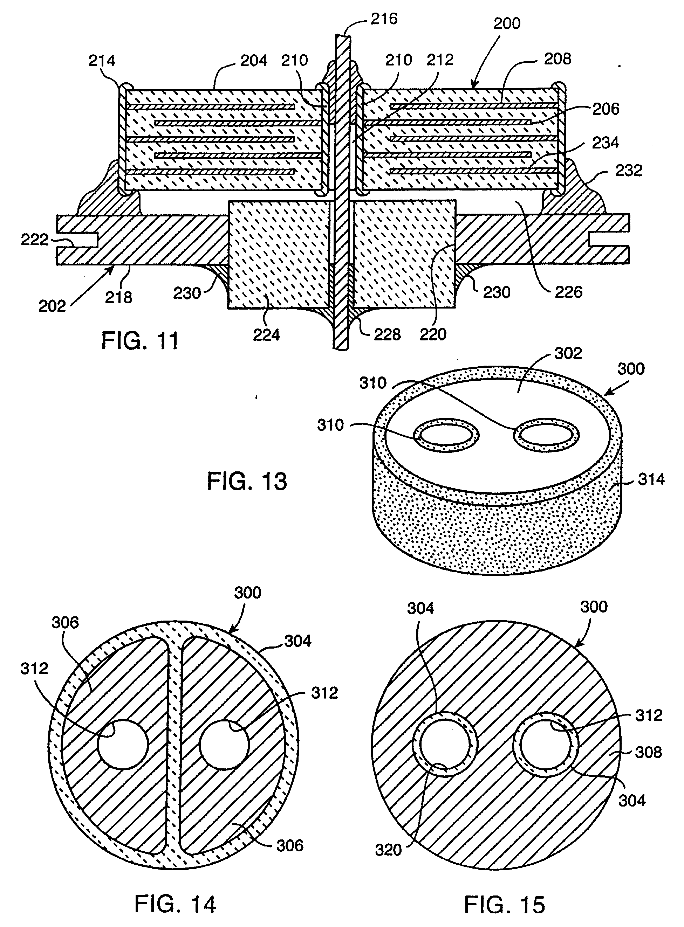

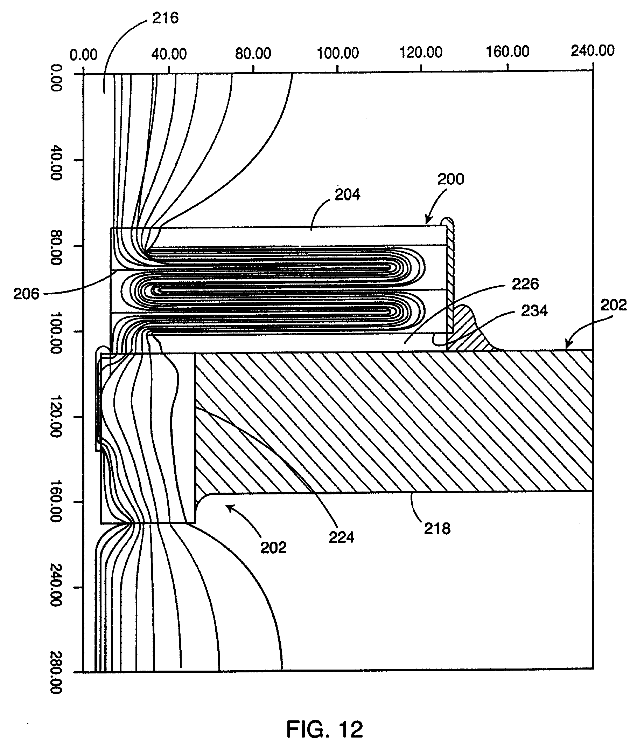

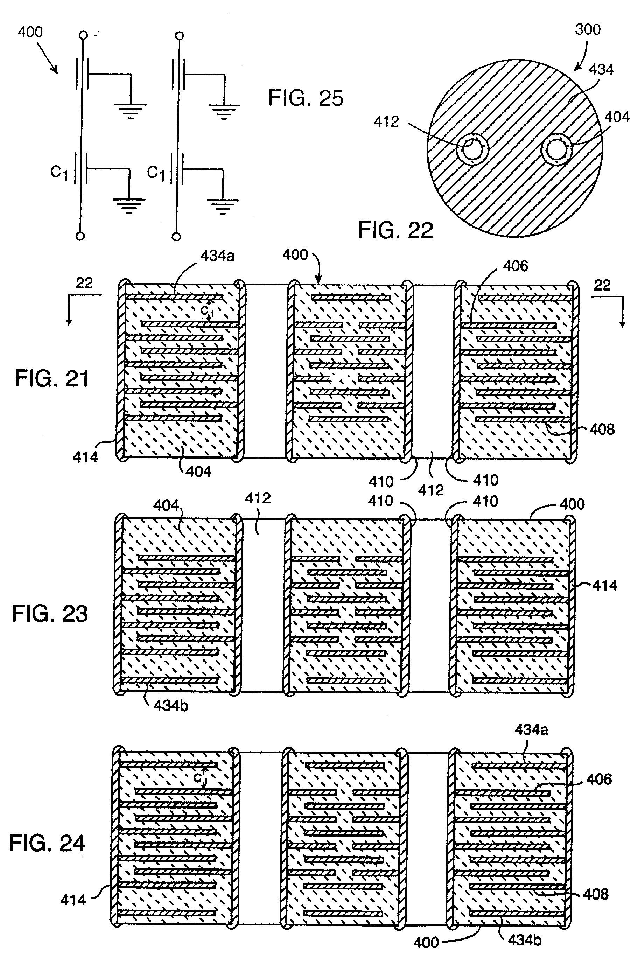

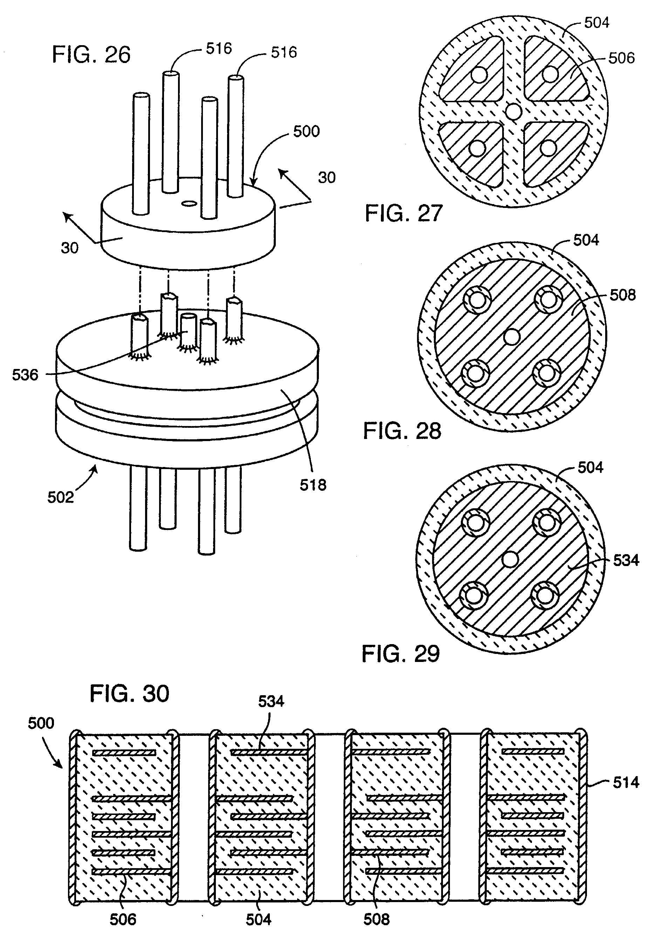

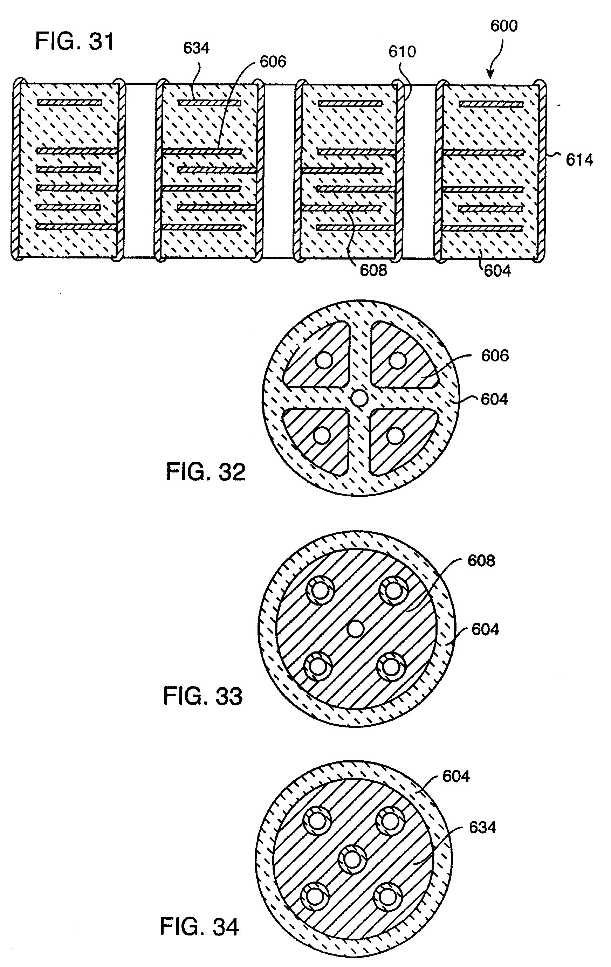

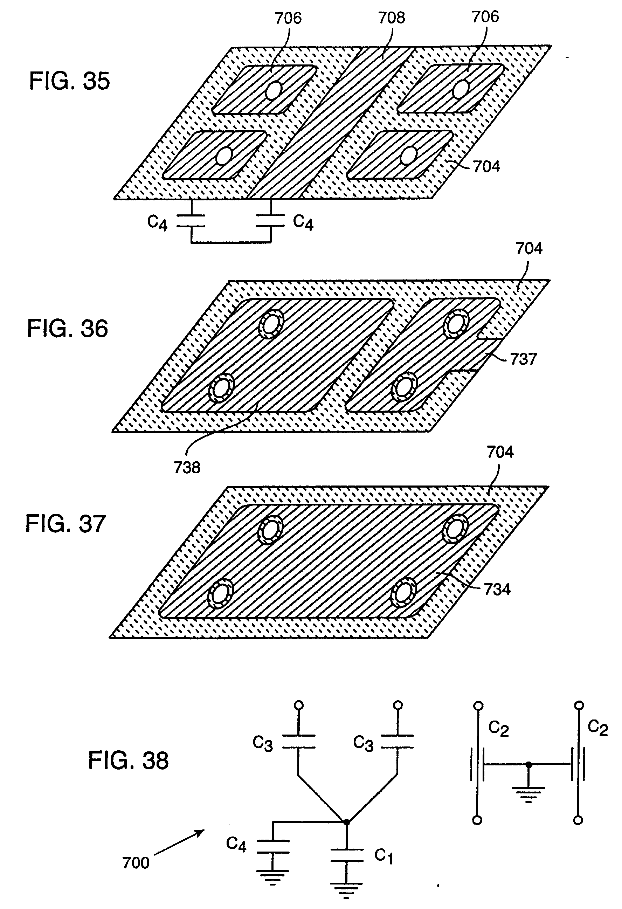

The improved feedhtrough filter capacitor assemblies of the present invention designated generally by the reference number 200 in FIGS. 11 and 12, by the reference number 300 in FIGS. 13-20, by the reference number 400 in FIGS. 21-25, by the reference number 500 in FIGS. 26-30, by the reference number 600 in FIGS. 31-34, and by the reference number 700 in FIGS. 35-38. Functionally equivalent elements of the various embodiments illustrated and described herein, including the prior art feedthrough filter capacitor 100 of FIGS. 1-6, will be designated by the same reference number in increments of 100.

The present invention involves the use of novel equipotential modeling techniques in order to manage the electromagnetic field stress on the capacitor's surface such that surface breakdown will not occur. More particularly, novel guard plate electrodes are described which manage the field stress on the surfaces of the ceramic feedthrough capacitors such that surface corona, microcoulomb discharges or catastrophic avalanche breakdown will not occur. It is critical that electric field strength (not just voltage) must be considered in an optimized capacitor design. The invention as described herein is also applicable to other components used within the ICD, including other high voltage monolithic ceramic capacitors that may be mounted on substrates, circuit boards or other locations within the ICD.

With reference to FIGS. 9 and 10, capacitor orientation, up or down, very important even in a prior art capacitor. When the active electrode plate is oriented down it results in a very high electric field stress between the capacitor body and the air gap between the capacitor and the conductive ferrule. When the capacitor is oriented with the active electrode plate up as shown in FIG. 10, this completely eliminates the high electric field stress in the aforementioned air gap.

Therefore there is a need for a marking technique during manufacturing of said capacitors so the capacitors can always be oriented with the active electrode plate up. This can be accomplished by putting a fiducial marker indentation in the ceramic i.e. a bump during the manufacturing of the ceramic in the green state i.e, before firing. In that way, after the capacitor is fired into a hard monolithic device an operator during manufacturing could easily tell which side is the active electrode plate and be placed upward. By having the identifying mark on the active electrode plate side this also facilitates continuous 100% quality inspection under a microscope i.e., during final visual mechanical inspection the operators can be instructed to look for the presence of the fiducial mark. Fiducial mark might be an indentation or raised bump. A pipette or syringe could be used to drop a lump of Barium Titanate on top of the ceramic capacitor that would be fired in place. This lump would be both be seen visually and could be felt by a fingertip.

Other forms of marking would include color dots using various inks. The trouble with this is that this would require that after silk screening that orientation be maintained throughout the binder bake out and firing (sintering) processes. The color dots would have to be added afterwards as the color dots would not be able to handle the high temperatures of ceramic firing.

Another alternative would be to use a dot of actual ceramic material from a different dielectric constant. The various ceramic compositions NPO, X7R, BX all have characteristic colors that vary from tan to green, etc. This is because the materials that are added to control the dielectric constant affect the grain boundaries of the ceramic structure thereby changing its color. Accordingly, a simple marking technique would be to place a dot or a drop of a different ceramic material on the top surface of the capacitor prior to firing. Then after firing one would see a region or small dot of ceramic on the top surface of the capacitor that had a completely different color.

FIGS. 11 and 12 illustrate a unipolar feedthrough filter capacitor 200 and its associated hermetic terminal 202, which are similar to the prior art feedthrough capacitor assembly 100, 102 illustrated in FIGS. 1-6. The feedthrough filter capacitor 200 comprises a unitized dielectric structure or ceramic-based monolith 204 having multiple capacitor-forming conductive electrode plates formed therein. These electrode plates include a plurality of spaced-apart layers of first or "active" electrode plates 206, and a plurality of spaced-apart layers of second or "ground" electrode plates 208 in stacked relation alternating or interleaved with the layers of "active" electrode plates 206. The active electrode plates 206 are conductively coupled to a surface metallization layer 210 lining a bore 212 extending axially through the feedthrough filter capacitor 200. The ground electrode plates 208 include outer perimeter edges which are exposed at the outer periphery of the capacitor 200 where they are electrically connected in parallel by a suitable conductive surface such as a surface metallization layer 214. The outer edges of the active electrode plates 206 terminate in spaced relation with the outer periphery of the capacitor body, whereby the active electrode plates are electrically isolated by the capacitor body 204 from the conductive layer 214 coupled to the ground electrode plates 208. Similarly, the ground electrode plates 208 have inner edges which terminate in spaced relation with the terminal pin bore 212, whereby the ground electrode plates are electrically isolated by the capacitor body 204 from a terminal pin 216 and the conductive layer 210 lining the bore 212. The number of active and ground electrode plates 206 and 208, together with the dielectric thickness or spacing therebetween, may vary in accordance with the desired capacitance value and voltage rating of the feedthrough filter capacitor 200.

The feedthrough filter capacitor 200 and terminal pin 216 are assembled to the hermetic terminal 202. The hermetic terminal includes a conductive ferrule 218 which comprises a generally ring-shaped structure formed from a suitable bio-compatible conductive material, such as titanium or a titanium alloy, and is shaped to define a central aperture 220 and a ring-shaped radially outwardly opening channel 222 for facilitated assembly with a test fixture (not shown) for hermetic sealed testing as has been described above, and also for facilitated assembly with the housing (also not shown) on an implantable medical device or the like. An insulating structure 224 is positioned within the central aperture 220 to prevent passage of fluids such as patient body fluids through the feedthrough filter assembly during normal use implanted within the body of a patient. More specifically, the hermetic seal 202 comprises an electrically insulating or dielectric structure 224 such as an alumina or fused glass type or ceramic-based insulator installed within the ferrule's central aperture 220. The insulating structure 224 is positioned relative to an adjacent axial side of the feedthrough filter capacitor 200 and cooperates therewith to define a short axial gap 226 therebetween. This axial gap 226 forms a portion of a leak detection vent and facilitates leak detection as described above. The insulating structure 224 thus defines an inboard face presented in a direction axially toward the adjacent capacitor body 204 and an opposite outboard face presented in a direction axially away from the capacitor body. The insulating structure 224 desirably forms a fluid-tight seal about the inner diameter surface of the conductive ferrule 218, and also forms a fluid-tight seal about the terminal pin 216. Such fluid impermeable seals are formed by inner and outer braze seals or the like 228 and 230. The insulating structure 224 thus prevents fluid migration or leakage through the ferrule 218 along any of the structural interfaces between the components mounted within the ferrule, while electrically isolating the terminal pin 216 from the ferrule 218.

The feedthrough filter capacitor 200 is mechanically and conductively attached to the conductive ferrule 218 by means of peripheral supports 232 which conductively couple the outer metallization layer 214 to a surface of the ferrule 218 while maintaining an axial gap 226 between a facing surface of the capacitor body 204, on the one hand, and surfaces of the insulating structure 224 and ferrule 218, on the other. The outside diameter connection between the capacitor 200 and the hermetic seal 202 is accomplished using a high temperature conductive thermal-setting material such as a conductive polyimide, solder, braze, or the like. As was the case with the structure shown in FIG. 5, the peripheral support 232 material is desirably discontinuous. In other words, there may be substantial gaps between the supports 232 which allow for the passage of helium during a leak detection test.

The feedthrough filter capacitor 200 of FIG. 11 is similar to the feedthrough filter capacitor 100 of FIGS. 1, 5 and 6 with the exception that an odd number electrode plate arrangement is used. As shown in FIG. 11, an extra ground electrode plate is provided at the lower end of the capacitor which serves as a guard electrode plate 234 in accordance with the present invention. This novel arrangement provides grounded electrodes 208 and 234 at the top and the bottom thereby managing the electromagnetic field stress such that the electric fields are concentrated around the inside diameter and pin of the capacitor 200. A disadvantage of such a device is that it's a little more difficult and costly in capacitor manufacturing (electrode stacking) to achieve such an arrangement. However, placement of guard or grounded electrode plates on the top and bottom- eliminates the need to track or sort capacitors for correct placement during installation onto the hermetic ferrule.

FIG. 12 illustrates JASON code electrostatic field modeling of the unipolar feedthrough filter capacitor 200 and related hermetic terminal 202 of FIG. 11. FIG. 12 is similar to FIG. 9 in that it is a cross-sectional slice of the right-hand quadrant of the assembly of FIG. 11. In summary, FIG. 12 is an equipotential model of the capacitor of FIG. 11 on an axis of rotation about the center lead 216. As described previously, the capacitor 200 has been designed to have a ground electrode plate 208 adjacent to an upper surface of the capacitor 200, and a grounded guard electrode plate 234 adjacent to a lower surface of the capacitor 200. This results in grounded electrode plates being oriented both up and down within the capacitor 200.

Accordingly, like in FIG. 10, the electrode 234 which is oriented down at the gap 226 between the capacitor 200 and the hermetic insulator 224 is a ground electrode plate which is attached to the outside diameter of the capacitor. This ground electrode plate 234 has the same electric field potential as the conductive ferrule 218 of the hermetic terminal 202. Accordingly, this eliminates the high electromagnetic field stress between the ceramic capacitor 200 and the metallic ferrule 218 in the space defined as 226. As can be seen in FIG. 12, there is literally no electromagnetic field stress that occurs between the bottom of the ceramic capacitor 200 and the hermetic terminal 202. As in FIG. 10, all of the electromagnetic field stress is included within the alumina hermetic seal 224 which has a very high break down strength. In addition, the capacitor upper electrode plate 208 is also a grounded plate. This contains the electric field entirely within the capacitor dielectric 204, such as barium titanate. This is also highly desirable since the capacitor dielectric 204 has a much higher voltage breakdown strength as compared to air, nitrogen or other typical backfill gas in an implantable medical device. One can also see that there is a smooth transition of the electric field lines from the hermetic seal 224 into the capacitor 200 inside diameter (ID) margin area. The ID margin is the space between the center lead wire or pin 216 and the capacitor's active electrode plate set 206. By adjusting this ID margin space, the capacitor designer can effect a design which minimizes electric field stress at the transition point between the hermetic seal 224 and the capacitor 200. Thus, a substantial reliability and design improvement is achieved simply by properly orienting the capacitor 200 when it is placed adjacent to the hermetic terminal 202 or other conductive structures.

FIGS. 13-20 illustrate another exemplary feedthrough filter capacitor 300 embodying the present invention. In this case, the capacitor 300 is of the bipolar design, and comprises a unitized dielectric structure or ceramic-based monolith 304 having multiple capacitor-forming conductive electrode plates formed therein. These electrode plates include a plurality of spaced-apart layers of first or "active" electrode plates 306, and a plurality of spaced-apart layers of second or "ground" electrode plates 308 in stacked relation alternating or interleaved with the layers of "active" electrode plates 306. The active electrode plates 306 are conductively coupled to a surface metallization layer 310 lining two bores 312 extending axially through the feedthrough filter capacitor 300. The ground electrode plates 308 include outer perimeter edges which are exposed at the outer periphery of the capacitor 300 where they are electrically connected in parallel by a suitable conductive surface such as a surface metallization layer 314. The outer edges of the active electrode plates 306 terminate in spaced relation with the outer periphery of the capacitor body, whereby the active electrode plates are electrically isolated by the capacitor body 304 from the conductive layer 314 coupled to the ground electrode plates 308. Similarly, the ground electrode plates 308 have inner edges which terminate in spaced relation with each of the terminal pin bores 312, whereby the ground electrode plates are electrically isolated by the capacitor body 304 from the conductive layer 310 lining the bore 312.

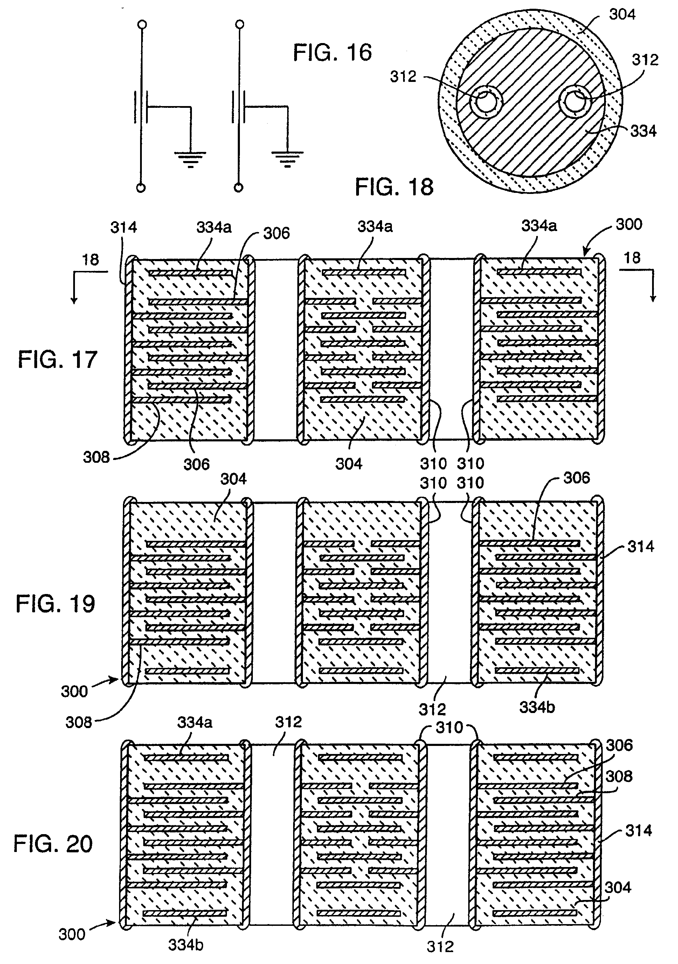

FIG. 13 is an isometric view of the bipolar feedthrough capacitor 300 discussed above. FIG. 14 illustrates the configuration of the active electrode plates 306 within the dielectric material 304. Similarly, FIG. 15 illustrates the configuration of the ground electrode plate 308. FIG. 16 is an electrical schematic of the capacitor of FIG. 13, showing the two feedthrough capacitors to ground.

FIG. 18 shows a floating or guard electrode plate 334, which is neither conductively coupled to the bore metallization 110 (and thus the active electrode plates 310), nor the outer metallization layer 314 (or the ground electrode plates 308). Three alternate uses of the guard electrode plate 334 are illustrated in FIGS. 17, 19 and 20.

In FIG. 17, the guard electrode plate 334a is positioned adjacent to an upper or top surface of the capacitor 300, and is not electrically or conductively connected to any other structure. This floating electrode plate 334a forms a very desirable feature within the capacitor 300. A capacitance is formed between this floating electrode plate 334a and the active electrode plate 306 that is adjacent to it. This forms a relatively high capacitance. When one considers the previous discussions where a small capacitance then develops in the air gap between such capacitor 300 and an adjacent structure such as a hermetic seal, this has a very desirable effect in that much of the voltage is created between the active electrode 306 and the floating electrode plate 334. This has the effect of greatly reducing the amount of voltage stress that occurs external to the capacitor 300 in the relatively low breakdown strength gas dielectric such as air, nitrogen or the like.

FIG. 19 illustrates another variation of the capacitor 300 of FIG. 13, wherein the floating electrode plate 334b is oriented at the bottom of said capacitor 300. This electrode helps to control the electric field symmetry at the lead wire and prevent charge pooling.

FIG. 20 is a preferred embodiment, which has floating electrode plates 334a and 334b both on the top of the capacitor 300 and on the bottom of the capacitor. As mentioned before, these floating electrode plates 334a and b grade and manage the electric fields on the surfaces of the capacitor 300 such that the reliability of the capacitor is greatly improved. Placement of top and bottom guard plates also eliminates the need to sort or orient capacitors during manufacture. It is also possible to significantly reduce the size of such capacitors 300 since the electric field stress has been reduced. Accordingly, this is ideal for implantable medical devices where size is of major concern.

FIGS. 21-25 illustrate another feedthrough filter capacitor 400 embodying the present invention. The primary difference between the capacitor 400 of FIGS. 21-24 and the capacitor 300 described above is the use of one or more guard electrode plates 434 which are conductively coupled to the outer metallization 414 at the outside diameter of the capacitor 400. In this case, the guard electrode plate 434 is grounded. The guard electrode plate 434 is even more effective than the floating electrode plate 334 in that it completely shields the electric field from the surface of the capacitor 400.

FIG. 21 illustrates the use of an upper grounded guard electrode plate 434a at the top of the capacitor 400. FIG. 23 illustrates a lower grounded guard electrode plate 434a at the bottom of the capacitor 400. FIG. 24 illustrates the use of grounded guard electrode plates 434a and 434b at the top and bottom of the capacitor 400.

Another advantage of the grounded guard electrode plate is evident by examining the schematic of FIG. 25. As can be seen, the guard electrode plate 434 adds additional capacitance, $C_1$, to ground from the lead wire or pin. This has the effect of improving or enhancing the feedthrough capacitor attenuation as an EMI filter. In other words, the ability to attenuate interference from cellular telephones and similar emitters found in the patient environment is enhanced.

FIGS. 26-29 illustrate yet another feedthrough filter capacitor 500 embodying the present invention. More specifically, these figures illustrate a quad polar, internally grounded feedthrough filter capacitor 500 similar to those shown and described in U.S. Patent No. 5,905,627, the contents of which are incorporated herein by reference.

FIG. 26 illustrates an isometric view of a disassembled quad polar EMI feedthrough capacitor 500 ready to be mounted onto the surface of the typical hermetic terminal 502 of an implantable medical device. In this case, the centered pin 536 is directly grounded to the conductive ferrule 518 of the hermetic terminal 502. FIG. 27 illustrates the active electrode plate 506 arrangement of said capacitor 500. It should be noted in FIG. 27 that all of the active electrode plate 506 corners have been rounded. This is in order to reduce electric field stress. It is commonly known in the art that electric field stress is undesirably increased at a sharp point or a corner. FIG. 28 illustrates an internally grounded electrode plate 508. In this case, the electrode plate 508 will be grounded to a grounded pin 536 centered on a hermetic terminal 502. FIG. 29 shows the guard electrode plate 534, which is also grounded to said center pin 536.

FIG. 30 is a cross-sectional view of the capacitor 500 showing the guard electrode plate 534 of FIG. 29 placed near the top of the capacitor 500 in order to grade the electric fields in that location. As previously described it is possible to place this guard electrode plate 534 also at the bottom of FIG. 30 or at the top and bottom as previously described.

FIGS. 31-34 illustrate an alternative electrode plate arrangement for the quad polar capacitor of FIGS. 26-30. FIG. 31 is a cross-sectional view of the capacitor 600 similar to the cross-sectional view of FIG. 30 for the capacitor 500. FIG. 32 illustrates the configuration of the active electrode plates 606 embedded within the dielectric casing 604. FIG. 33 illustrates the configuration of the ground electrode plates 608. FIG. 34 illustrates the configuration of the guard electrode plate 634.

With reference to FIG. 31, it can be seen that the floating electrode or guard plate 634 is not connected to the active electrode plates 606, the capacitor 600 outer diameter, or to the grounded center pin. In other words, this electrode plate 634 has no electrical connection, but is free to float within the capacitor 600. This electrode plate 634 is shown at the top of FIG. 31 where it tends to grade the electric field as previously described. This grading is because of the relatively high capacitance that is achieved between the capacitor's active electrode plate 606 and this floating electrode plate 634. It should be noted that this floating electrode plate 634 would be ineffective if placed adjacent to a capacitor ground electrode plate 608. It will be obvious to one skilled in the art that this floating plate may be oriented up, down or both up and down as required in a particular design to properly manage electric field stress.

FIGS. 35-38 illustrate the use of a floating guard electrode plate 734 in a capacitor 700 utilizing the isolated ground technology of U.S. Patent No. 5,751,539, the contents of which are incorporated herein. In particular, the quad polar feedthrough capacitor of FIGS. 19-22 of U.S. Patent No. 5,751,539 is illustrated as modified with the addition of the floating guard electrode plate 734.

FIG. 35 and FIG. 36 illustrate a typical electrode plate set from U.S. Patent No. 5,751,539, specifically, FIGS. 20-22 of that patent. Electrode plates 706b communicate with ground electrode plates set 737 to form a conventional feedthrough capacitor (C2). These conventional feedthrough capacitors are shown in FIG. 38 as C2. The electrode plates 706a communicate with electrode plate set 738 which also communicates with electrode plate set 708. The electrode plate set 708 defines an isolated ground capacitor C1 which isolates the conventional feedthrough capacitors C3 above ground. The rationale for this is fully described in U.S. Patent No. 5,751,539. A brief summarization is that there are certain implantable defribullators and other implantable medical devices which have a limitation on the amount of capacitance to ground. This is typical, for example, in a cardiac pacemaker or ICD that employs minute ventilation circuitry. In minute ventilation, the pacemaker transmits an RF signal from the lead tip implanted in the cardiac tissue. The pacemaker also has a detection circuit which receives this RF signal. During respiration, the chest cavity expands and contracts. This means that the impedance between the lead tip and the implanted medical device changes. Accordingly, the pacemaker can accurately determine the patient's respiration rate. This is important so that the output or heartbeat of the cardiac pacemaker can be adjusted to accommodate various patient activities such as jogging, running and the like. Conventional feedthrough capacitors of a high value, when installed on the minute ventilation circuit, such as capacitor C2, would put too much capacitance on this RF signal thereby dragging down the signal level to a point where it could not be detected by the minute ventilation detection circuit. Accordingly, there is a need in the art to isolate feedthrough capacitors above ground thereby not attenuating the minute ventilation signal. The isolated ground capacitor is ideal for this purpose. This is particularly true for the new or congestive heart.

Feedthrough capacitors C3 provide a great deal of line-to-line EMI filtering which is known in the art as differential mode attenuation. At very high frequency, sufficient common mode or EMI attenuation at ground is provided through the series combination of C3 and C1. These devices are also needed in implantable cardioverter defribullators. Accordingly, as described in the present invention, either floating or grounded guard electrode plates 734 can be employed. It is shown in FIG. 37 that a floating guard electrode plate 734 be employed on the bottom of the capacitor. As shown in previous drawings, this guard electrode plate could be placed on the top or on the top and bottom and grounded as shown in other embodiments. The purpose of the guard electrode plate, as described previously, is to manage electric field gradience across the surface of the capacitor to therefore prevent arc-over or breakdown. There is also a capacitance that is formed between the electrode plate set 706 and electrode plate set 704. This is due to the edge communication between these electrode plates and is known as parasitic capacitance. This parasitic capacitance is shown in the schematic FIG. 38 as C4. This capacitance tends to increase the amount of capacitance to ground and thereby increase the amount of high frequency filtering. This is easy to accommodate in design. The capacitor designer simply makes sure that the parallel combination of C1 and C4 is in the desired range of capacitance that the minute ventilation circuitry can tolerate.

Although several embodiments of the invention have been described in detail for purposes of illustration, various further modifications may be made without departing from the spirit and scope of the invention. Accordingly, the invention is not to be limited, except as by the appended claims.

**Claims**

1. A capacitor assembly, comprising:

   a casing of dielectric material;
   active and ground sets of electrode plates disposed within the casing to form an electromagnetic interference (EMI) filter capacitor; and
   a guard electrode plate disposed within the casing adjacent to a first surface thereof, for reducing electromagnetic field stress on the first surface of the casing.

2. The capacitor assembly of claim 1, including a second guard electrode plate disposed within the casing adjacent to a second surface thereof, for reducing electromagnetic field stress on the second surface of the casing.

3. The capacitor assembly of claim 1, wherein the guard electrode plate is grounded.

4. The capacitor assembly of claim 3, wherein the guard electrode plate is grounded to external capacitor surface metallization.

5. The capacitor assembly of claim 3, wherein the guard electrode plate is grounded to internal capacitor surface metallization.

6. The capacitor assembly of claim 5, wherein the internal capacitor surface metallization is conductively coupled to a grounded pin.

7. The capacitor assembly of claim 1, wherein the guard electrode plate is electrically isolated from both the active and ground sets of electrode plates.

8. The capacitor assembly of claim 7, wherein the guard electrode plate is disposed between an active electrode plate and the first surface of the casing.

9. The capacitor assembly of claim 1, wherein the guard electrode plate is optimized utilizing computer generated electrostatic field modeling.

10. The capacitor assembly of claim 9, wherein the electrostatic field modeling is JASON code electrostatic field modeling.

11. The capacitor assembly of claim 1, including an isolated ground set of electrode plates disposed co-planarly within the casing with the active set of electrode plates and electrically isolated from the active set of electrode plates, wherein the ground set of electrode plates cooperates with the isolated set of electrode plates to define a coupling capacitor for coupling the EMI filter capacitor to a common ground point.

12. A capacitor assembly, comprising:

   a casing having first and second electrode plates incased therein in spaced relation to form an electromagnetic interference (EMI) filter capacitor, and at least one terminal pin bore formed axially therethrough;
   at least one conductive terminal pin extending through said at least one terminal pin bore in conductive relation with said first electrode plate;
   a conductive ferrule having at least one aperture formed axially therethrough, said casing being mounted to said ferrule to extend across and close said at least one ferrule aperture with said second electrode plate in conductive relation with said ferrule;
   at least one hermetic seal formed from a dielectric material and extending across and sealing said at least one ferrule aperture at one axial side of said capacitor body, said at least one hermetic seal defining an inboard face presented toward said capacitor body and an outboard face presented away from said capacitor body, said at least one terminal pin extending through said at least one hermetic seal; and

a guard electrode plate disposed within said casing adjacent to a first surface thereof facing the conductive ferrule, for reducing electromagnetic field stress on the first surface of said casing.

13. The capacitor assembly of claim 12, wherein said at least one hermetic seal and said capacitor body cooperatively define an axial gap formed therebetween.

14. The capacitor assembly of claim 12, wherein said first and second electrode plates respectively comprise first and second sets of electrode plates encased in interleaved spaced relation within said capacitor body.

15. The capacitor assembly of claim 12, wherein said capacitor body is formed from a substantially monolithic dielectric material.

16. The capacitor assembly of claim 12, wherein said at least one terminal pin bore comprises a plurality of axially extending terminal pin bores in said capacitor body, and further wherein said at least one conductive terminal pin comprises a corresponding plurality of terminal pins extending respectively through said terminal pin bores and said at least one hermetic seal.

17. The capacitor assembly of claim 16, wherein said at least one hermetic seal comprises a plurality of hermetic seals corresponding to a plurality of ferrule apertures.

18. The capacitor assembly of claim 12, wherein said capacitor body has a generally discoidal shape.

19. The capacitor assembly of claim 12, wherein said capacitor body has a generally rectangular shape.

20. The capacitor assembly of claim 12, including a plurality of axially extending terminal pin bores formed in said capacitor body, and at least one conductive ground pin extending into at least one of the plurality of axially extending terminal pin bores in conductive relation with said second electrode plate.

21. The capacitor assembly of claim 12, wherein the guard electrode plate is grounded.

22. The capacitor assembly of claim 12, wherein the guard electrode plate is electrically isolated from both the first and second electrode plates.

23. The capacitor assembly of claim 22, wherein the guard electrode plate is disposed between an active electrode plate and the first surface of the casing.

24. The capacitor assembly of claim 12, wherein the guard electrode plate is optimized utilizing electrostatic field modeling.

25. The capacitor assembly of claim 24, wherein the electrostatic field modeling is JASON code electrostatic field modeling.

26. The capacitor assembly of claim 12, including an isolated ground plate disposed co-planarly within the casing with the first electrode plate and electrically isolated from the first electrode plate, wherein the second electrode plate cooperates with the isolated ground electrode plate to define a coupling capacitor for coupling the EMI filter capacitor to a common ground point.

27. A process for reducing electromagnetic field stress on the surface of a capacitor in a feedthrough terminal assembly, comprising the steps of:

forming an electromagnetic interference (EMI) filter capacitor of an active electrode plate and a ground electrode plate disposed within -a casing of dielectric material having at least one terminal pin bore formed axially therethrough;
including a guard electrode plate within the casing adjacent to a first surface thereof;
placing a terminal assembly comprising at least one conductive terminal pin and a conductive ferrule adjacent

EP 1 308 971 A2

to the first surface of the casing such that the terminal pin extend through the terminal pin bore and is conductively coupled to the active electrode plate, and the ground electrode plate is conductively coupled to the ferrule; and

optimizing the guard electrode plate utilizing electrostatic field modeling of the feedthrough terminal assembly.

28. The process of claim 27, wherein the optimizing step utilizes JASON code electrostatic field modeling.

29. The process of claim 27, wherein the optimizing step includes the step of adjusting axial spacing between the guard electrode plate and an adjacent electrode plate within the casing.

30. The process of claim 27, wherein the optimizing step includes the step of adjusting an inner diameter margin space between the terminal pin and an edge of the guard electrode plate.

31. The process of claim 27, including the step of grounding the guard electrode plate.

32. The process of claim 27, wherein the step of including a guard electrode plate within the casing includes the step of placing the guard electrode plate therein so that it is electrically isolated from the terminal pin and a ground.

33. The process of claim 32, wherein the guard electrode plate is dispose between an active electrode plate and the first surface of the casing.

34. A capacitor assembly, comprising:

a casing of dielectric material;
active and ground sets of electrode plates disposed within the casing to form an electromagnetic interference (EMI) filter capacitor; and
means for marking the casing to indicate a side thereof adjacent to an active electrode plate.

35. The capacitor assembly of claim 34, wherein the marking means comprises a fiducial marker indentation in the dielectric material.

36. The capacitor assembly of claim 34, wherein the marking means comprises a raised bump.

37. The capacitor assembly of claim 34, wherein the marking means comprises a color dot.

38. The capacitor assembly of claim 34, including a guard electrode plate disposed within the casing adjacent to a first surface thereof, for reducing electromagnetic field stress on the first surface of the casing.

39. The capacitor assembly of claim 38, including a second guard electrode plate disposed within the casing adjacent to a second surface thereof, for reducing electromagnetic field stress on the second surface of the casing.

40. The capacitor assembly of claim 38, wherein the guard electrode plate is grounded.

41. The capacitor assembly of claim 38, wherein the guard electrode plate is electrically isolated from both the active and ground sets of electrode plates.

42. The capacitor assembly of claim 41, wherein the guard electrode plate is disposed between an active electrode plate and the first surface of the casing.

43. The capacitor assembly of claim 38, wherein the guard electrode plate is optimized utilizing computer generated electrostatic field modeling.

44. The capacitor assembly of claim 38, including an isolated ground set of electrode plates disposed co-planarly within the casing with the active set of electrode plates and electrically isolated from the active set of electrode plates, wherein the ground set of electrode plates cooperates with the isolated set of electrode plates to define a coupling capacitor for coupling the EMI filter capacitor to a common ground point.

FIG. 1
PRIOR ART

FIG. 2
PRIOR ART

FIG. 3
PRIOR ART

FIG. 4
PRIOR ART

FIG. 5
PRIOR ART

FIG. 6
PRIOR ART

OVERSHOT WITH RINGING

VOLTS

V MAX.

PULSE DURATION "D"

OPTIONAL BIPHASIC PULSE

TIME

RISETIME = R.I.

FIG. 7
PRIOR ART

FIG. 8
PRIOR ART

FIG. 9
PRIOR ART

FIG. 10

PRIOR ART

FIG. 11

FIG. 13

FIG. 14

FIG. 15

FIG. 12

FIG. 16

FIG. 18

FIG. 17

FIG. 19

FIG. 20

FIG. 25

FIG. 22

FIG. 21

FIG. 23

FIG. 24

FIG. 26

FIG. 27

FIG. 28

FIG. 29

FIG. 30

FIG. 31

FIG. 32

FIG. 33

FIG. 34

FIG. 35

706        708        706

C₄        C₄

704

FIG. 36

704

737

738

FIG. 37

704

734

FIG. 38

C₃        C₃

C₂        C₂

700

C₄        C₁